# DEMANDE DE BREVET EUROPEEN

(11) **EP 4 672 524 A1**
(43) Date de publication de la demande: **31.12.2025**
(21) Numéro de dépôt: 24315314.5
(22) Date de dépôt: 28.06.2024
(51) Int. Cl.: H02G 1/02, H02G 7/05

(54) **DISPOSITIF, KIT ET PROCÉDÉ DE REPRISE EN CHARGE DE CÂBLE(S) CONDUCTEUR(S) DE LIGNE AÉRIENNE DE TRANSPORT ET/OU DE DISTRIBUTION DE COURANT ÉLECTRIQUE**

(71) Demandeur: RTE RESEAU DE TRANSPORT D'ELECTRICITE, 92073 Paris La Défense Cedex (FR)
(72) Inventeur: Breheret, Michaël, 79250 Nueil-les-Aubiers (FR)
(74) Mandataire: Bonnet, Michel

(57) **Abrégé**

Ce dispositif (36) de reprise en charge de câble(s) conducteur(s) de ligne aérienne de transport et/ou de distribution de courant électrique comporte une extrémité supérieure (12), avec élément supérieur (14) de fixation à une extrémité d'élingue pour engin de levage, et une poulie (26) à face ouverte de récupération de câble conducteur. Il comporte en outre un palonnier supérieur (20), solidaire de l'extrémité supérieure (12), et un palonnier inférieur (22), suspendu au palonnier supérieur (20) à l'aide au moins d'une paire principale (24) de chaînes d'isolateurs (24A, 24B) et à une extrémité latérale duquel est suspendue la poulie (26) à face ouverte de récupération de câble.

## Description

La présente invention concerne un dispositif de reprise en charge d'au moins un câble conducteur de ligne aérienne de transport et/ou de distribution de courant électrique. Elle concerne également un kit à partir duquel un tel dispositif peut être monté, ainsi qu'un procédé de reprise en charge d'au moins un câble conducteur de ligne aérienne de transport et/ou de distribution de courant électrique.

Un tel dispositif est par exemple utile lorsqu'un pylône de ligne aérienne électrique doit être remplacé ou sur lequel une intervention doit être réalisée avec nécessité de dépose de câbles(s) conducteur(s). En général, un tel pylône porte au moins un terne, c'est-à-dire au moins un ensemble de trois câbles conducteurs d'un courant triphasé. En moyenne, haute ou très haute tension, par exemple pour des pylônes de lignes aériennes à 63 ou 90 kV, il est même habituel de disposer de pylônes à double circuit, c'est-à-dire à deux ternes, sans oublier les câbles de garde.

L'invention s'applique plus particulièrement à un dispositif de reprise en charge de câble(s) conducteur(s) comportant :
- une extrémité supérieure avec élément supérieur de fixation à une extrémité d'élingue pour engin de levage ; et
- une poulie à face ouverte de récupération de câble conducteur.

En utilisation courante, l'extrémité supérieure, directement porteuse de la poulie à face ouverte, est fixée à l'extrémité d'une élingue dont l'autre extrémité est par exemple suspendue à un engin de levage, en général une grue ou équivalent, voire parfois un hélicoptère. L'ensemble est soulevé pour récupérer un câble conducteur de ligne aérienne dans le réa de la poulie et le désolidariser d'une chaîne d'isolateurs suspendue au pylône à remplacer ou traiter. Compte tenu de la configuration du dispositif de reprise en charge, un seul câble est repris temporairement en charge et une structure temporaire porteuse telle que celle décrite dans le document de brevet WO 2022/059034 A1 doit être préalablement montée sur place, sur laquelle déposer ce câble conducteur.

Il en résulte plusieurs inconvénients.

Tout d'abord, la structure temporaire porteuse du document précité, en forme de mât haubané à une ou plusieurs consoles latérales, présente une emprise au sol importante et peu pratique dans certaines configurations pourtant usuelles sur le terrain : ligne aérienne s'étendant en zone boisée, à proximité d'une zone d'habitations, etc. Elle est en outre complexe et chronophage à monter. De plus, dans le cas du remplacement d'un pylône à double circuit, deux mâts haubanés doivent être installés de part et d'autre de la ligne aérienne augmentant d'autant l'emprise au sol.

Par ailleurs, la configuration du dispositif de reprise en charge permet le déplacement de plusieurs câbles conducteurs, du pylône vers le mât haubané, mais un par un seulement et après consignation de la portion de ligne électrique aérienne concernée. Encore une fois, dans le cas du remplacement d'un pylône à double circuit, huit câbles conducteurs doivent être successivement repris en charge si l'on compte les câbles de garde, sans compter qu'il devient de plus en plus difficile de consigner simultanément deux circuits d'une même ligne électrique. Il faut donc consigner le premier circuit, déplacer successivement ses câbles du pylône vers le premier mât haubané, remettre le premier circuit sous tension, avant de procéder aux mêmes opérations pour le deuxième circuit à l'aide du deuxième mât haubané.

Il peut ainsi être souhaité de prévoir un dispositif de reprise en charge de câble(s) conducteur(s) qui permette de s'affranchir d'au moins une partie des problèmes et contraintes précités.

Il est donc proposé un dispositif de reprise en charge d'au moins un câble conducteur de ligne aérienne de transport et/ou de distribution de courant électrique, comportant :
- une extrémité supérieure avec élément supérieur de fixation à une extrémité d'élingue pour engin de levage ;
- une poulie à face ouverte de récupération de câble conducteur ;
- un palonnier supérieur solidaire de l'extrémité supérieure ; et
- un palonnier inférieur :
   - suspendu au palonnier supérieur à l'aide au moins d'une paire principale de chaînes d'isolateurs, et
   - à une extrémité latérale duquel est suspendue la poulie à face ouverte de récupération de câble.

Ainsi, cette configuration spécifique plus élaborée du dispositif de reprise en charge améliore la stabilité de la reprise de câble et la rend en outre possible en travaux sous tension, y compris en cas d'intempéries. Notamment, il est tout à fait envisageable de se passer de mât haubané, grâce à cette stabilité améliorée par la présence de palonniers, en maintenant simplement le dispositif de reprise en charge, avec son ou ses câbles, suspendu par l'engin de levage tout le temps nécessaire pour la réalisation des travaux envisagés sur le pylône libéré. Non seulement aucune consignation n'est en outre nécessaire, même si elle reste tout à fait possible, mais en plus l'opération est grandement accélérée et avec beaucoup moins d'emprise au sol. Des travaux nécessitant plusieurs semaines selon l'enseignement de l'état de la technique peuvent être réduits à quelques jours seulement d'intervention grâce à l'invention.

De façon optionnelle, un dispositif de reprise en charge d'au moins un câble selon l'invention peut en outre comporter au moins une répétition de l'assemblage suivant, fixé entre la paire principale de chaînes d'isolateurs et le palonnier inférieur :
- un palonnier intermédiaire supérieur à une extrémité latérale duquel est suspendue une poulie à face ouverte de récupération de câble supplémentaire ;
- un palonnier intermédiaire inférieur suspendu et rigidement fixé au palonnier intermédiaire supérieur à l'aide d'une structure de raidissement ;
- une paire supplémentaire de chaînes d'isolateurs suspendue et fixée au palonnier intermédiaire inférieur,
sachant que le palonnier intermédiaire supérieur de l'assemblage le plus élevé de ladite au moins une répétition est suspendu et fixé à la paire principale de chaînes d'isolateurs, et que le palonnier inférieur est suspendu et fixé à la paire supplémentaire de chaînes d'isolateurs de l'assemblage le moins élevé de ladite au moins une répétition.

Ainsi, grâce à cette option, il est possible de reprendre en charge plusieurs câbles simultanément, par exemple les trois câbles d'un même terne et le câble supplémentaire de garde correspondant si l'on prévoit deux ou trois répétitions.

De façon optionnelle également, la structure de raidissement comporte des éléments crantés pour un réglage en distance relative et en décalage latéral relatif du palonnier intermédiaire inférieur par rapport au palonnier intermédiaire supérieur de chaque répétition de l'assemblage.

Ainsi, grâce à cette option supplémentaire, il est possible de s'adapter à plusieurs types de pylônes différents, en réglant comme il convient les distances et décalages entre palonniers et donc entre poulies à faces ouvertes de récupération de câbles conducteurs, pour correspondre à chaque fois aux distances et décalages entre câbles conducteurs à reprendre en charge.

De façon optionnelle également, les éléments crantés sont configurés pour un réglage par pas d'au plus dix cm en distance relative et en décalage latéral relatif du palonnier intermédiaire inférieur par rapport au palonnier intermédiaire supérieur de chaque répétition de l'assemblage.

De façon optionnelle également, les éléments crantés sont des barres télescopiques crantées.

De façon optionnelle également, une chaîne d'isolateurs lestée est en outre suspendue à une autre extrémité latérale du palonnier inférieur, opposée à l'extrémité latérale à laquelle est suspendue la poulie à face ouverte de récupération de câble.

De façon optionnelle également, la poulie à face ouverte de récupération de câble, respectivement chaque poulie à face ouverte de récupération de câble supplémentaire le cas échéant, est dotée d'un bras de guidage, incliné vers le haut lorsqu'elle est en disposition suspendue, pour un guidage de câble conducteur vers au moins un réa qu'elle comporte.

Il est également proposé un kit pour le montage d'un dispositif de reprise en charge d'au moins un câble conducteur de ligne aérienne de transport et/ou de distribution de courant électrique, comportant les éléments suivants :
- une extrémité supérieure avec élément supérieur de fixation à une extrémité d'élingue pour engin de levage ;
- une poulie à face ouverte de récupération de câble conducteur ;
- un palonnier supérieur configuré pour être solidarisé à l'extrémité supérieure ; et
- un palonnier inférieur et une paire principale de chaînes d'isolateurs, configurés pour permettre une suspension du palonnier inférieur au palonnier supérieur à l'aide au moins de cette paire principale de chaînes d'isolateurs, une extrémité latérale du palonnier inférieur étant en outre configurée pour que la poulie à face ouverte de récupération de câble y soit suspendue.

De façon optionnelle, les éléments constitutifs du kit sont configurés pour être solidarisés les uns aux autres par axes d'assemblage et goupilles ou par axes de balanciers.

Il est ainsi très facile de monter le dispositif de reprise en charge au sol à la main et sans risques de troubles musculosquelettiques, sachant en outre que chaque élément constitutif est en tant que tel de poids limité, notamment de poids inférieur à 15 kg, voire même inférieur à 10 kg pour la plupart des éléments qui peuvent être envisagés en aluminium ou alliage d'aluminium. Il est réciproquement également très facile de le démonter pour un autre usage ultérieur.

Il est également proposé un procédé de reprise en charge d'au moins un câble conducteur de ligne aérienne de transport et/ou de distribution de courant électrique, à l'aide d'un dispositif de reprise en charge d'au moins un câble tel que défini précédemment ou monté à partir d'un kit tel que défini précédemment, comportant les étapes suivantes :
- fixation d'une première extrémité d'élingue à un engin de levage ;
- fixation de l'élément supérieur de fixation du dispositif de reprise en charge à une deuxième extrémité de l'élingue ;
- élévation du dispositif de reprise en charge à l'aide de l'engin de levage, pour une approche dans un voisinage d'un pylône de la ligne aérienne supportant chaque câble conducteur à reprendre en charge ;
- engagement de chaque câble conducteur dans un réa de chaque poulie à face ouverte du dispositif de reprise en charge, au voisinage du pylône ;
- désolidarisation de chaque câble conducteur du pylône ; et
- éloignement du dispositif de reprise en charge à l'aide de l'engin de levage, pour un maintien à distance de chaque câble conducteur par rapport au pylône.

L'invention sera mieux comprise à l'aide de la description qui va suivre, donnée uniquement à titre d'exemple et faite en se référant aux dessins annexés dans lesquels :
- la figure 1 représente schématiquement la structure générale d'un kit/dispositif de reprise en charge d'au moins un câble conducteur de ligne aérienne de transport et/ou de distribution de courant électrique, selon un mode de réalisation de l'invention ;
- la figure 2 représente schématiquement la structure générale d'un kit/assemblage optionnel de complément du kit/dispositif de reprise en charge de la figure 1 ;
- la figure 3 illustre en perspective un exemple concret de poulie à face ouverte pour le kit/dispositif de la figure 1 et/ou le kit/assemblage de la figure 2 ;
- la figure 4A illustre un premier exemple de pylône porteur de ligne aérienne de transport et/ou de distribution de courant électrique, auquel peut s'appliquer l'objet de la présente invention ;
- la figure 4B illustre un deuxième exemple de pylône porteur de ligne aérienne de transport et/ou de distribution de courant électrique, auquel peut s'appliquer l'objet de la présente invention ;
- la figure 4C illustre un troisième exemple de pylône porteur de ligne aérienne de transport et/ou de distribution de courant électrique, auquel peut s'appliquer l'objet de la présente invention ;
- la figure 4D illustre un quatrième exemple de pylône porteur de ligne aérienne de transport et/ou de distribution de courant électrique, auquel peut s'appliquer l'objet de la présente invention ;
- la figure 5 illustre un exemple de système à deux dispositifs de reprise en charge de la figure 1 complétés chacun par deux assemblages de la figure 2, selon un montage conforme à une reprise de double terne pour pylône tel que celui de la figure 4A ;
- la figure 6 illustre les étapes successives d'un procédé de reprise en charge d'au moins un câble conducteur de ligne aérienne de transport et/ou de distribution de courant électrique, selon un mode de réalisation de l'invention ;
- la figure 7 représente schématiquement une installation, porteuse du système de reprise en charge de la figure 5, telle qu'elle peut se présenter au début de l'exécution du procédé de la figure 6 ; et
- la figure 8 représente schématiquement l'installation de la figure 7 telle qu'elle peut se présenter en fin d'exécution du procédé de la figure 6.

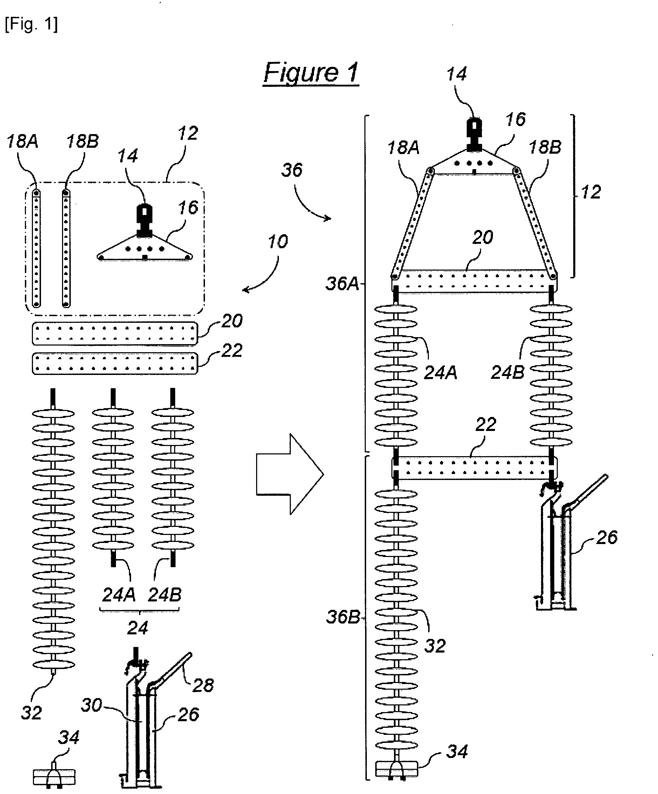

Le kit 10, pour le montage d'un dispositif de reprise en charge d'au moins un câble conducteur de ligne aérienne de transport et/ou de distribution de courant électrique, représenté schématiquement en partie gauche de la figure 1 comporte tout d'abord une extrémité supérieure 12 avec élément supérieur 14 de fixation à une extrémité d'élingue pour engin de levage. Cette extrémité supérieure 12 comporte par exemple une plaque triangulaire 16, au sommet de laquelle est fixé l'élément supérieur 14, présentant un certain nombre de trous traversants pour la fixation simple d'éléments supplémentaires par axes d'assemblage et goupilles ou par axes de balanciers. Son élément de fixation 14 comporte par exemple un anneau dans lequel vient s'insérer une extrémité d'élingue. Elle comporte en outre deux barres 18A, 18B, optionnellement télescopiques et crantées par le percement de trous traversants, aptes à être fixées par leurs extrémités supérieures respectives aux extrémités inférieures gauche et droite de la plaque triangulaire 16, par exemple par axes et goupilles. La configuration télescopique des deux barres 18A et 18B permet un réglage en hauteur de l'extrémité supérieure 12. Les trous traversants sont par exemple percés en une rangée, disposés longitudinalement sur cette rangée par pas de quelques centimètres, par exemple tous les cinq ou dix centimètres.

Le kit 10 comporte en outre deux palonniers 20 et 22. Le palonnier 20, dit palonnier supérieur, est configuré pour être solidarisé à l'extrémité supérieure 12, plus précisément aux extrémités inférieures respectives des deux barres 18A et 18B. Il présente optionnellement mais avantageusement une forme rectangulaire crantée, par exemple percée de deux rangées de trous traversants disposés longitudinalement par pas de quelques centimètres, par exemple tous les dix centimètres. Le palonnier 22, dit palonnier inférieur, est identique au palonnier supérieur 20 par souci de simplicité à la conception. Il est destiné à être suspendu au palonnier supérieur 20.

Le kit 10 comporte en outre une paire principale 24 de chaînes d'isolateurs 24A, 24B, configurée avec le palonnier inférieur 22 pour permettre sa suspension sous le palonnier supérieur 20, notamment à l'aide de fixations à liaisons rotules telles que des fixations à éléments de type « ball socket » et « oeillet à rotule » avec goupilles. Plus précisément, conformément à la configuration habituelle des isolateurs dans le domaine technique considéré, chaque chaîne d'isolateurs 24A, 24B est suspendue au palonnier supérieur 20 à l'aide d'un oeillet à rotule avec goupille et fixée au palonnier inférieur 22 à l'aide d'un élément de type « ball socket » avec goupille. Les chaînes d'isolateurs 24A et 24B sont, à titre d'exemple non limitatif, à dix isolateurs de type F100 ou F160 selon la norme internationale CEI-IEC 120. D'une façon générale, elles doivent comporter un nombre suffisant d'isolateurs pour une reprise de câble avec distances respectées en travaux sous tension, notamment dix isolateurs à 63 ou 90 kV, au moins quinze à 225 kV.

Le kit 10 comporte en outre une poulie 26 à face ouverte de récupération de câble conducteur, destinée à être suspendue à une extrémité latérale du palonnier inférieur 22. Elle est en outre optionnellement mais avantageusement dotée d'un bras de guidage 28, incliné vers le haut lorsqu'elle est en disposition suspendue telle qu'illustrée sur la figure 1, pour un guidage amélioré de câble conducteur vers au moins un réa 30 qu'elle comporte.

De façon optionnelle, mais avantageuse pour un équilibrage du dispositif de reprise en charge destiné à être monté à l'aide du kit 10, ce dernier comporte en outre une chaîne d'isolateurs de lestage 32, ainsi qu'un lest 34, destinés à être suspendus à une autre extrémité latérale du palonnier inférieur 22, opposée à l'extrémité latérale à laquelle est suspendue la poulie à face ouverte 26. La chaîne d'isolateurs de lestage 32 est, à titre d'exemple non limitatif, à dix-huit isolateurs de type F100 ou F160 selon la norme internationale CEI-IEC 120.

Comme déjà évoqué précédemment, les éléments 16, 18A, 18B, 20, 22, 24, 26, 32, 34 décrits ci-dessus sont destinés à être solidarisés les uns aux autres par axes d'assemblage et goupilles ou par axes de balanciers, pouvant inclure également des fixations à liaisons rotules pour les chaînes d'isolateurs, pour former le dispositif 36 de reprise en charge de câble illustré en partie droite de la figure 1. Ces moyens de solidarisation permettent un montage et un démontage simple et rapide du dispositif 36.

Ainsi, le dispositif 36 est monté par l'assemblage des éléments suivants, présentés de haut en bas lorsque le dispositif 36 est suspendu à l'élingue d'un engin de levage :
- l'extrémité supérieure 12 constituée :
   - de la plaque triangulaire 16 au sommet de laquelle est disposé l'élément supérieur 14 de fixation à l'élingue, et
   - des deux barres 18A, 18B dont les extrémités supérieures sont respectivement fixées par axes et goupilles, ou par axes de balanciers, aux deux extrémités inférieures gauche et droite de la plaque triangulaire 16 ;
- le palonnier supérieur 20 auquel les extrémités inférieures des deux barres 18A, 18B sont respectivement fixées par axes et goupilles, ou par axes de balanciers, dans deux trous de sa rangée crantée supérieure, notamment les trous des deux extrémités longitudinales de cette rangée crantée supérieure ;
- la paire principale 24 de chaînes d'isolateurs 24A, 24B suspendue au palonnier supérieur 20 par oeillets à rotules et goupilles dans deux trous de la rangée crantée inférieure de ce dernier, par exemple les trous des deux extrémités longitudinales de cette rangée crantée inférieure ;
- le palonnier inférieur 22 auquel les extrémités inférieures des deux chaînes d'isolateurs 24A, 24B de la paire principale 24 sont respectivement fixées par « ball sockets » et goupilles dans deux trous de sa rangée crantée supérieure, notamment les trous des deux extrémités longitudinales de cette rangée crantée supérieure ;
- la poulie à face ouverte 26 suspendue au palonnier inférieur 22 par axe et goupille, ou par axe de balancier, dans le trou de l'une des deux extrémités longitudinales de la rangée crantée inférieure de ce dernier (celle de droite sur la figure 1) ;
- la chaîne d'isolateurs de lestage 32 suspendue au palonnier inférieur 22 par oeillet à rotule et goupille dans le trou de l'autre des deux extrémités longitudinales de la rangée crantée inférieure de ce dernier (celle de gauche sur la figure 1) ; et
- le lest 34 suspendu à la chaîne d'isolateurs de lestage 32 par « ball socket » et goupille en son extrémité inférieure libre.

On notera que l'extrémité supérieure 12 forme avec le palonnier supérieur 20 une structure rigide de forme générale trapézoïdale qui permet d'améliorer la stabilité de la reprise de câble. Cette structure rigide forme en outre avec la paire principale 24 de chaînes d'isolateurs 24A, 24B une portion supérieure 36A du dispositif 36 de reprise en charge de câble qui rend cette reprise possible en travaux sous tension. Le palonnier inférieur 22, la poulie à face ouverte 26, la chaîne d'isolateurs de lestage 32 et le lest 34 forment quant à eux une portion inférieure 36B du dispositif 36, porteuse de câble, permettant en coopération avec la portion supérieure 36A de se passer de mât haubané en maintenant simplement le dispositif 36 de reprise en charge, avec son câble, suspendu par l'engin de levage tout le temps nécessaire pour la réalisation des travaux envisagés sur le pylône libéré de ce câble.

Le dispositif 36 de reprise en charge de câble illustré en partie droite de la figure 1 ne peut reprendre la charge que d'un seul câble, ce qui limite ses possibilités d'usage pour des pylônes porteurs de plusieurs câbles, notamment porteurs d'au moins un terne de câbles.

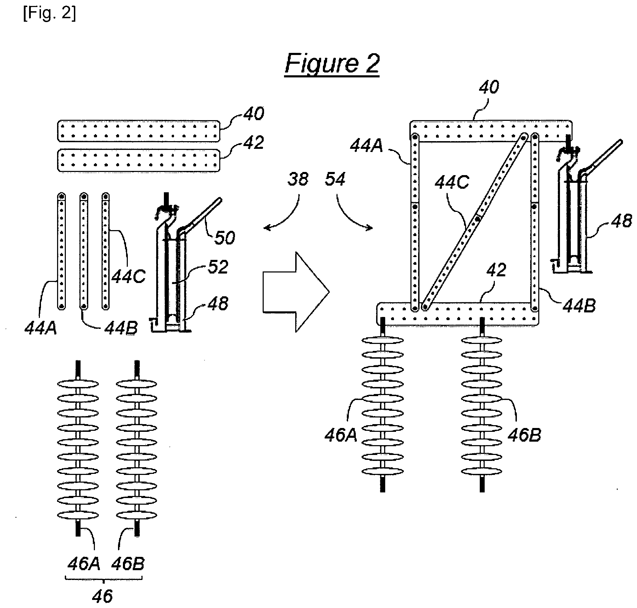

C'est la raison pour laquelle le kit 10 peut être complété par un kit optionnel de complément 38 tel que celui représenté sur la figure 2.

Ce kit de complément 38, pour le montage d'un assemblage destiné à être fixé entre la paire principale 24 de chaînes d'isolateurs et le palonnier inférieur 22, représenté schématiquement en partie gauche de la figure 2 comporte tout d'abord deux palonniers 40 et 42, par exemple identiques aux palonniers 20 et 22. Le palonnier 40, dit palonnier intermédiaire supérieur, est configuré pour être suspendu et fixé à la paire principale 24 de chaînes d'isolateurs. Le palonnier 42, dit palonnier intermédiaire inférieur, est configuré pour être suspendu et rigidement fixé au palonnier intermédiaire supérieur 40 à l'aide d'une structure de raidissement.

Pour le montage de cette structure de raidissement, le kit de complément 38 comporte trois barres 44A, 44B, 44C, par exemple identiques aux barres 18A et 18B, aptes à être fixées par leurs extrémités supérieures respectives au palonnier intermédiaire supérieur 40, par exemple par axes et goupilles, et par leurs extrémités inférieures respectives au palonnier intermédiaire inférieur 42, par exemple également par axes et goupilles. La configuration télescopique crantée des trois barres 44A, 44B et 44C permet un réglage en hauteur de la structure de raidissement.

Le kit de complément 38 comporte en outre une paire supplémentaire 46 de chaînes d'isolateurs 46A, 46B, configurée pour être suspendue et fixée au palonnier intermédiaire inférieur 42, notamment à l'aide de fixations à « ball sockets » avec goupilles. Les chaînes d'isolateurs 46A et 46B sont, à titre d'exemple non limitatif, à dix isolateurs de type F100 ou F160 selon la norme internationale CEI-IEC 120.

Le kit de complément 38 comporte en outre une poulie 48 à face ouverte de récupération de câble conducteur, destinée à être suspendue à une extrémité latérale du palonnier intermédiaire supérieur 40. Elle est en outre optionnellement mais avantageusement dotée d'un bras de guidage 50, incliné vers le haut lorsqu'elle est en disposition suspendue telle qu'illustrée sur la figure 2, pour un guidage de câble conducteur vers au moins un réa 52 qu'elle comporte.

Comme déjà évoqué précédemment, les éléments 40, 42, 44A, 44B, 44C, 46, 48 décrits ci-dessus sont destinés à être solidarisés les uns aux autres par axes d'assemblage et goupilles ou par axes de balanciers, pouvant inclure également des fixations à liaisons rotules pour les chaînes d'isolateurs, pour former l'assemblage 54 illustré en partie droite de la figure 2, à fixer entre la paire principale 24 de chaînes d'isolateurs et le palonnier inférieur 22 du dispositif 36 de la figure 1. Ces moyens de solidarisation permettent un montage et un démontage simple et rapide de l'assemblage 54.

Ainsi, l'assemblage 54 est constitué par la fixation des éléments suivants, présentés de haut en bas lorsque cet assemblage 54 est introduit dans le dispositif 36 suspendu à l'élingue d'un engin de levage :
- le palonnier intermédiaire supérieur 40 auquel les extrémités inférieures des deux chaînes d'isolateurs 24A, 24B de la paire principale 24 sont respectivement destinées à être fixées par « ball sockets » et goupilles dans deux trous de sa rangée crantée supérieure, par exemple les trous des deux extrémités longitudinales ;
- les trois barres 44A, 44B, 44C fixées par leurs extrémités supérieures respectives au palonnier intermédiaire supérieur 40, par axes et goupilles, ou par axes de balanciers, dans trois trous respectifs de sa rangée crantée inférieure, les deux premières barres 44A et 44B étant disposées orthogonalement aux deux palonniers 40 et 42, la troisième barre 44C étant disposée en diagonale entre les deux premières pour assurer une bonne rigidité de l'ensemble ;
- le palonnier intermédiaire inférieur 42 auquel les extrémités inférieures des trois barres 44A, 44B, 44C sont respectivement destinées à être fixées par axes et goupilles, ou par axes de balanciers, dans trois trous respectifs de sa rangée crantée supérieure ;
- la paire supplémentaire 46 de chaînes d'isolateurs 46A, 46B suspendue au palonnier intermédiaire inférieur 42 par oeillets à rotules et goupilles dans deux trous respectifs de la rangée crantée inférieure de ce dernier, et dont les deux extrémités inférieures sont destinée à être fixées au palonnier inférieur 22 par « ball sockets » et goupilles dans deux trous respectifs de la rangée crantée supérieure de ce dernier ; et
- la poulie à face ouverte supplémentaire 48 suspendue au palonnier intermédiaire supérieur 40 par axe et goupille, ou par axe de balancier, dans le trou de l'une des deux extrémités longitudinales de la rangée crantée inférieure de ce dernier (celle de droite sur la figure 2).

L'insertion de l'assemblage 54 dans le dispositif 36 de reprise en charge de câble permet donc d'ajouter la poulie à face ouverte supplémentaire 48 à la poulie à face ouverte 26, ce qui rend le dispositif 36 apte à reprendre deux câbles en charge simultanément.

Plusieurs assemblages tels que celui de la figure 2 peuvent être successivement insérés dans le dispositif 36 de reprise en charge de câble, pour augmenter le nombre de poulies à faces ouvertes et donc le nombre de câbles pouvant être repris en charge simultanément, sachant que le palonnier intermédiaire supérieur de l'assemblage le plus élevé est suspendu et fixé à la paire principale 24 de chaînes d'isolateurs, et que le palonnier inférieur 22 est suspendu et fixé à la paire supplémentaire de chaînes d'isolateurs de l'assemblage le moins élevé. Par ailleurs, deux assemblages successifs sont assemblés entre eux par fixation des deux extrémités inférieures de la paire supplémentaire 46 de chaînes d'isolateurs du plus élevé des deux au palonnier intermédiaire supérieur 40 du moins élevé des deux par « bail sockets » et goupilles dans deux trous respectifs de la rangée crantée supérieure de ce palonnier intermédiaire supérieur 40.

Avantageusement, les trois barres crantées 44A, 44B, 44C de la structure de raidissement, en coopération avec les palonniers intermédiaires crantés 40 et 42, permettent un réglage en distance relative et en décalage latéral relatif du palonnier intermédiaire inférieur 42 par rapport au palonnier intermédiaire supérieur 40 de chaque répétition de l'assemblage 54, ce qui permet de configurer la disposition relative des différentes poulies à faces ouvertes de l'ensemble ainsi constitué pour s'adapter à plusieurs types de pylônes différents et correspondre à chaque fois aux distances et décalages entre câbles conducteurs à reprendre en charge.

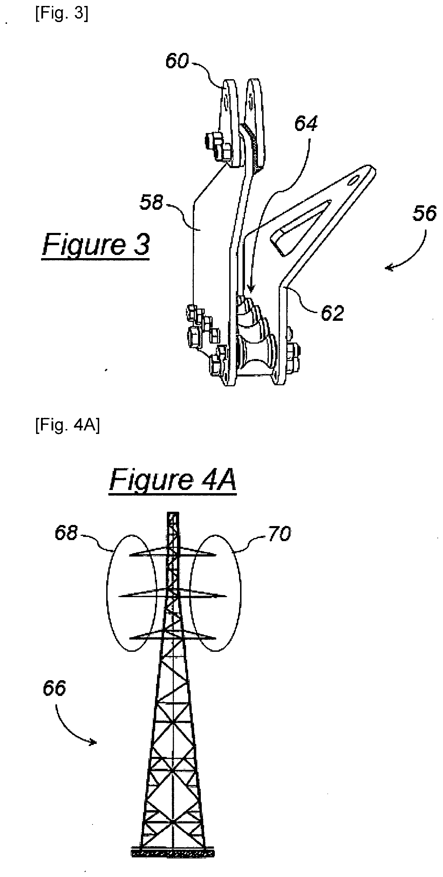

Un exemple concret de poulie à face ouverte pour le kit/dispositif 10, 36 de la figure 1 et/ou le kit/assemblage 38, 54 de la figure 2 est illustré en perspective sur la figure 3 sous la référence générale 56.

Cette poulie 56 présente une première face 58 formant montant principal, de portion inférieure rectangulaire porteuse de fixations par boulonnage, et de portion supérieure essentiellement trapézoïdale légèrement inclinée vers l'intérieur pour la fixation à son sommet d'une extrémité 60 d'assemblage, par axe et goupille, ou par axe de balancier, à l'un quelconque des palonniers, en l'occurrence le palonnier inférieur 22 de la figure 1 ou le palonnier intermédiaire supérieur 40 de la figure 2, dans l'un quelconque des trous de sa rangée crantée inférieure. Elle présente une deuxième face ouverte 62 disposée en vis-à-vis de la première face 58, de portion inférieure rectangulaire porteuse de fixations par boulonnage coopérant avec celles de la première face 58, et de portion supérieure essentiellement triangulaire évidée inclinée vers le haut et l'extérieur pour former un bras de guidage. Les fixations par boulonnage mentionnées ci-dessus permettent le maintien des deux faces 58 et 62 l'une en face de l'autre à distance et la disposition d'un réa 64 à cinq roulements disposés avantageusement en arc de cercle. Un seul roulement conventionnel serait tout à fait envisageable, pomme représenté schématiquement sur les figures 1 et 2, mais un ensemble de réa 64 à cinq roulements tel que celui de la figure 3 permet un accueil et une reprise en charge de câble améliorés.

Plusieurs types de pylônes électriques, auxquels un dispositif de reprise en charge de câbles tel que celui de la figure 1 lorsqu'il est en outre muni de plusieurs assemblages tels que celui de la figure 2 peut s'adapter, sont illustrés sur les figures 4A à 4D. Ces exemples ne sont pas limitatifs.

La figure 4A illustre un pylône treillis 66 en tonneau à double terne, porteur de deux circuits d'une ligne aérienne de transport et/ou de distribution de courant électrique triphasé. Il présente trois consoles latérales 68 orientées vers la gauche de la figure 4A, la plus basse flanquée sur une partie inférieure tronconique du pylône, les deux plus hautes sur une partie supérieure cylindrique verticale, pour porter le premier circuit. La console intermédiaire s'étend latéralement au-delà des deux autres. De façon symétrique, il présente trois autres consoles latérales 70 orientées vers la droite de la figure 4A pour porter le deuxième circuit, produisant ainsi une silhouette en tonneau des extrémités des six consoles latérales porteuses des câbles à reprendre en charge. Deux dispositifs de reprise en charge de câbles à deux assemblages complémentaires chacun doivent alors être prévus et réglés à l'aide des palonniers et barres crantés pour reproduire cette silhouette de manière à pouvoir reprendre en charge les six câbles de ce pylône.

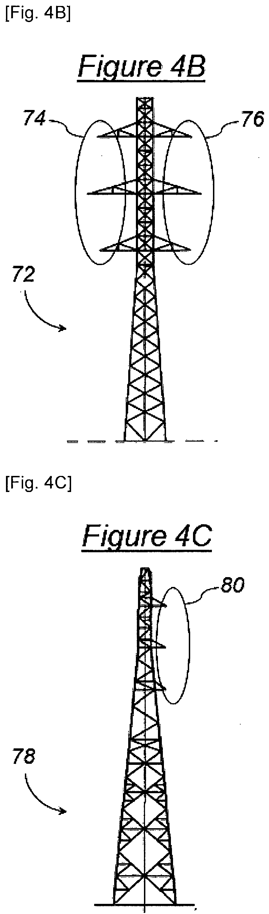

La figure 4B illustre un pylône treillis 72 en drapeau à double terne, porteur de deux circuits d'une ligne aérienne de transport et/ou de distribution de courant électrique triphasé. Il présente trois consoles latérales 74 orientées vers la gauche de la figure 4B, toutes flanquées sur une partie supérieure cylindrique verticale du pylône, pour porter le premier circuit. La console intermédiaire s'étend latéralement au-delà des deux autres. De façon symétrique, il présente trois autres consoles latérales 76 orientées vers la droite de la figure 4B pour porter le deuxième circuit, produisant ainsi une silhouette en drapeau des extrémités des six consoles latérales porteuses des câbles à reprendre en charge. Deux dispositifs de reprise en charge de câbles à deux assemblages complémentaires chacun doivent alors être prévus et réglés à l'aide des palonniers et barres crantés pour reproduire cette silhouette de manière à pouvoir reprendre en charge les six câbles de ce pylône.

La figure 4C illustre un pylône treillis 78 en drapeau à simple terne, porteur d'un seul circuit d'une ligne aérienne de transport et/ou de distribution de courant électrique triphasé. Il présente trois consoles latérales 80 orientées vers la droite de la figure 4C, la plus basse flanquée sur une partie inférieure tronconique du pylône, les deux plus hautes sur une partie supérieure cylindrique verticale, pour porter cette ligne aérienne. Les consoles s'étendent latéralement à une même distance de l'axe central vertical du pylône. Un dispositif de reprise en charge de câbles à deux assemblages complémentaires doit alors être prévu et réglé à l'aide des palonniers et barres crantés pour reproduire cette silhouette de manière à pouvoir reprendre en charge les trois câbles de ce pylône.

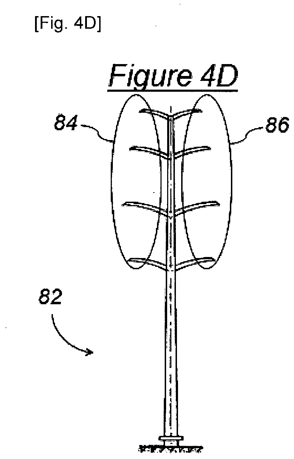

La figure 4D illustre un pylône monopode 82 en muguet à double terne et câbles de garde, porteur de deux circuits d'une ligne aérienne de transport et/ou de distribution de courant électrique triphasé avec chacune un câble de garde en partie supérieure. Il présente quatre consoles latérales 84 orientées vers la gauche de la figure 4D, toutes flanquées sur le pied unique du pylône, pour porter le premier circuit. Les consoles intermédiaires s'étendent latéralement au-delà des deux autres. De façon symétrique, il présente quatre autres consoles latérales 86 orientées vers la droite de la figure 4D pour porter le deuxième circuit, produisant ainsi une silhouette générale en brin de muguet. Deux dispositifs de reprise en charge de câbles à deux assemblages complémentaires chacun, incluant en outre chacun une poulie à face ouverte supplémentaire par exemple suspendue à une extrémité du palonnier supérieur, doivent alors être prévus et réglés à l'aide des palonniers et barres crantés pour reproduire cette silhouette de manière à pouvoir reprendre en charge les huit câbles de ce pylône.

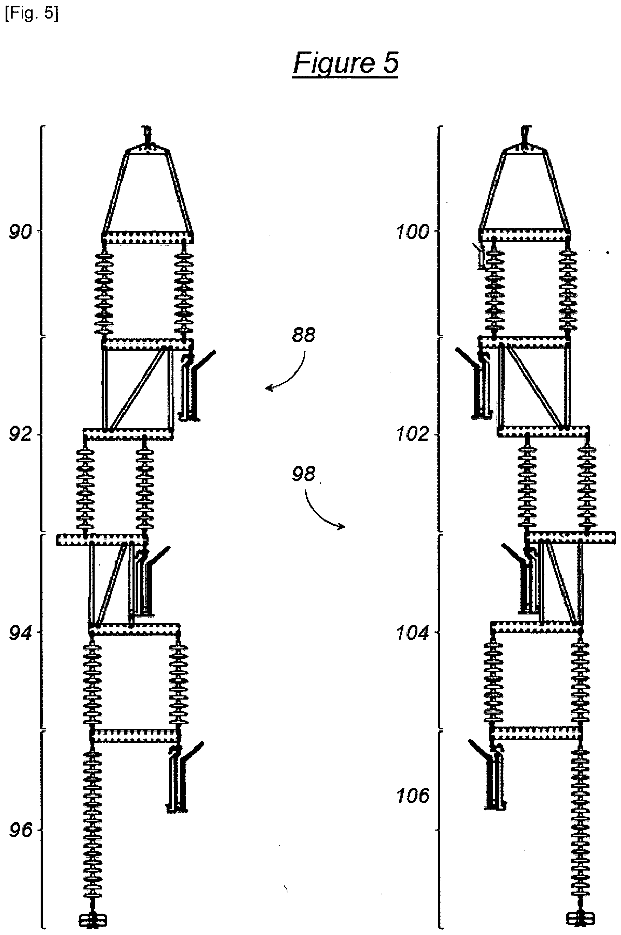

La figure 5 illustre un exemple de système à deux dispositifs symétriques de reprise en charge de la figure 1 complétés chacun par deux assemblages de la figure 2, selon un montage conforme à une reprise de double terne pour pylône tel que celui de la figure 4A.

Le dispositif de gauche 88, destiné à rependre en charge les trois câbles des trois consoles latérales 68 de gauche du pylône treillis 66 en tonneau, comporte :
- une portion supérieure 90 similaire à la portion supérieure 36A du dispositif 36 de la figure 1 ;
- une première portion intermédiaire 92, suspendue à la portion supérieure 90 par « ball sockets » et goupilles, similaire à l'assemblage 54 de la figure 2 ;
- une deuxième portion intermédiaire 94, suspendue à la première portion intermédiaire 92 par « bail sockets » et goupilles, similaire à l'assemblage 54 de la figure 2 ; et
- une portion inférieure 96, suspendue à la deuxième portion intermédiaire 94 par « bail sockets » et goupilles, similaire à la portion inférieure 36B du dispositif 36 de la figure 1.

Le dispositif de droite 98, destiné à rependre en charge les trois câbles des trois consoles latérales 70 de droite du pylône treillis 66 en tonneau, comporte :
- une portion supérieure 100 similaire à la portion supérieure 36A du dispositif 36 de la figure 1 mais orientée en sens inverse, avec une petite poulie à face ouverte et bras de guidage supplémentaire fixée à l'extrémité gauche du palonnier supérieur pour la reprise en charge d'un éventuel câble de garde ;
- une première portion intermédiaire 102, suspendue à la portion supérieure 100 par « ball sockets » et goupilles, similaire à l'assemblage 54 de la figure 2 mais orientée en sens inverse ;
- une deuxième portion intermédiaire 104, suspendue à la première portion intermédiaire 102 par « bail sockets » et goupilles, similaire à l'assemblage 54 de la figure 2 mais orientée en sens inverse ; et
- une portion inférieure 106, suspendue à la deuxième portion intermédiaire 104 par « bail sockets » et goupilles, similaire à la portion inférieure 36B du dispositif 36 de la figure 1 mais orientée en sens inverse.

Chacun des deux dispositifs 88, 98 de reprise en charge de câbles est réglé en distances relatives et décalages latéraux de ses poulies à faces ouvertes grâce aux six palonniers crantés et aux huit barres télescopiques crantées qu'il comporte, pour une adaptation précise au pylône treillis 66 en tonneau. Un autre réglage leur permettrait de s'adapter à d'autres pylônes, notamment les pylônes des figures 4B, 4C (où un seul dispositif de reprise en charge de câbles est nécessaire et suffisant) et 4D.

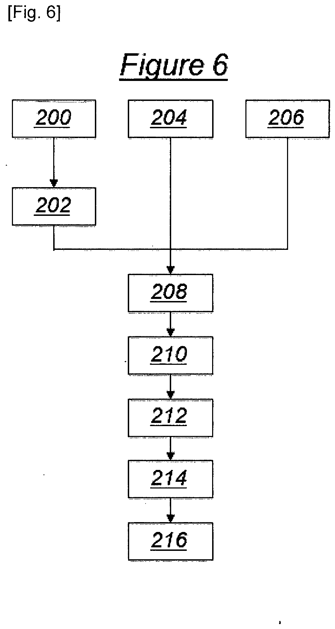

Un procédé de reprise en charge d'au moins un câble conducteur de ligne aérienne de transport et/ou de distribution de courant électrique, à l'aide d'un dispositif de reprise en charge d'au moins un câble selon l'un quelconque des modes de réalisation envisagés précédemment va maintenant être décrit en référence aux figures 6 à 8. Concrètement, c'est plus précisément mais à titre purement illustratif et non limitatif un procédé de reprise en charge du double terne du pylône treillis 66 de la figure 4A à l'aide du système à deux dispositifs de reprise en charge de câbles de la figure 5 qui va être décrit et illustré.

Au cours d'une première étape 200 préalable et optionnelle, dans le cas où le système ou dispositif de reprise en charge n'est pas encore monté, un kit pour son montage est apporté sur site.

Selon le mode de réalisation de la figure 5, ce kit comporte :
- une plaque triangulaire à élément supérieur de fixation, huit barres télescopiques crantées, six palonniers crantés, trois paires de chaînes d'isolateurs à dix isolateurs, une chaîne d'isolateurs de lestage à dix-huit isolateurs, un lest et trois poulies à faces ouvertes pour reprise de terne, pour la constitution du dispositif 88 ; ainsi que
- une plaque triangulaire à élément supérieur de fixation, huit barres télescopiques crantées, six palonniers crantés, trois paires de chaînes d'isolateurs à dix isolateurs, une chaîne d'isolateurs de lestage à dix isolateurs, un lest, trois poulies à faces ouvertes pour reprise de terne et une petite poulie à face ouverte supplémentaire pour reprise de câble de garde (inutile dans l'exemple du pylône treillis 66 tel qu'illustré sur la figure 4A), pour la constitution du dispositif 98.

Au cours d'une étape suivante 202, également préalable et optionnelle, le système de la figure 5 est monté au sol de part et d'autre du pylône treillis 66.

Au cours d'une étape 204, indépendante des étapes optionnelles 200 et 202, deux engins de levage 108, 110 et deux élingues 112, 114 sont apportés sur site, de part et d'autre du pylône treillis 66.

Au cours d'une étape 206, a priori indépendante des étapes 200 à 204, deux premières extrémités des deux élingues 112, 114 sont fixées respectivement aux deux engins de levage 108, 110. Elles sont par exemple suspendues à des crochets de ces engins.

Au cours d'une étape 208, postérieure aux étapes 200 et 202 lorsqu'elles sont exécutées, deux deuxièmes extrémités des deux élingues sont fixées respectivement aux deux éléments supérieurs de fixation 14 des deux dispositifs 88 et 98 du système de la figure 5.

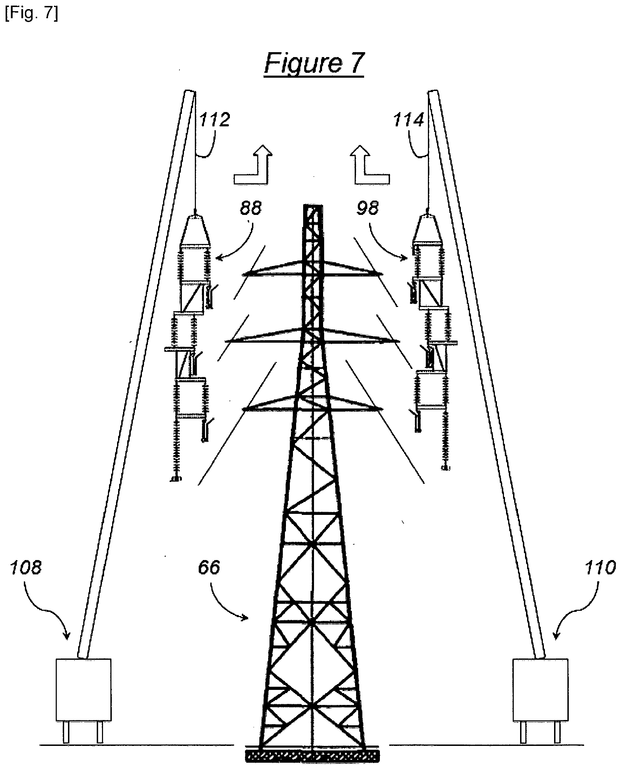

Ensuite, au cours d'une étape d'élévation 210 illustrée par la figure 7, les deux dispositifs 88 et 98 sont soulevés de terre à l'aide des deux engins de levage 108 et 110, pour une approche dans un voisinage du pylône treillis 66 supportant les six câbles conducteurs à reprendre en charge aux extrémités des six consoles latérales. Cette approche peut être guidée depuis le sol à l'aide de cordes de guidage et de maintien fixées aux lests 34. Les chaînes d'isolateurs de lestage 32 remplissent ainsi une fonction supplémentaire d'isolation électrique pour ces cordes.

En suivant l'indication des flèches illustrées sur la figure 7, chaque câble conducteur est respectivement engagé dans le réa de chaque poulie à face ouverte correspondante au cours d'une étape 212. Cet engagement est facilité par les bras de guidage des poulies. Plus précisément, les deux dispositifs 88 et 98 sont approchés horizontalement des câbles conducteurs en maintenant les extrémités supérieures des bras de guidage des poulies sous ces câbles. Puis, lorsque chaque câble conducteur à reprendre en charge se trouve au-dessus de chaque bras de guidage de chaque poulie, les deux dispositifs 88 et 98 sont élevés verticalement pour réaliser l'engagement de chaque câble conducteur dans chaque bras de guidage vers chaque réa de poulie.

De façon connue en soi et non détaillée, chaque câble conducteur est désolidarisé du pylône treillis 66 au cours d'une étape suivante 214.

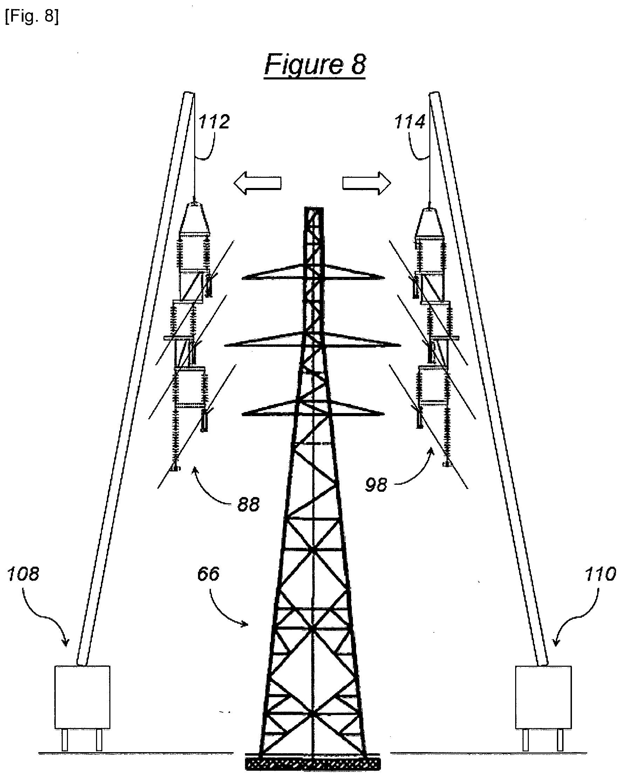

Enfin, au cours d'une étape d'éloignement 216 illustrée par la figure 8, les deux dispositifs 88 et 98 porteurs des deux ternes de câbles du pylône treillis 66 sont éloignés pour un maintien à distance de chaque câble conducteur par rapport au pylône 66. Cette disposition de l'ensemble constitué des deux engins de levage 108, 110, des deux élingues 112, 114 et des deux dispositifs 88, 90 suspendus au deux élingues et porteurs des six câbles peut être conservée pendant toute la durée d'intervention sur le pylône treillis 66.

On notera que les étapes 200 à 216 ont été décrites comme s'exécutant simultanément pour les dispositifs 88 et 98, mais la reprise en charge de câbles peut s'exécuter indépendamment, notamment successivement pour la reprise en charge des câbles du côté gauche du pylône treillis 66 et pour celle des câbles du côté droit.

On notera également qu'elles doivent être exécutées en respectant toutes les contraintes de sécurité requises et connues lorsqu'elle se font en travaux sous tension.

Il apparaît clairement qu'un dispositif de reprise en charge de câble(s) tel que l'un de ceux décrits précédemment permet une reprise de câbles d'un pylône sur lequel une intervention doit être faite de façon simplifiée et rapide, c'est-à-dire avec la possibilité de réaliser cette reprise de câbles en travaux sous tension, en se passant de devoir installer un mât haubané. Il en résulte en outre un encombrement réduit.

On notera par ailleurs que l'invention n'est pas limitée aux modes de réalisation décrits précédemment.

En particulier, il n'a pas été décrit spécifiquement de reprise en charge de terne avec câble de garde, bien que le dispositif 98 de la figure 5 le prévoie avec sa petite poulie à face ouverte et bras de guidage supplémentaire prévue à cet effet. Dans ce cas, deux principes de reprise en charge peuvent être envisagés :
- un premier principe selon lequel la configuration géométrique des quatre câbles de l'ensemble constitué du terne et du câble de garde peut être reproduite par le montage du dispositif 98, y compris en ajoutant un assemblage supplémentaire si nécessaire, auquel cas l'ensemble peut être repris en charge en travaux sous tension comme décrit précédemment ;
- un deuxième principe selon lequel la configuration géométrique des quatre câbles de l'ensemble constitué du terne et du câble de garde n'est pas reproduite par le montage du dispositif 98, auquel cas la reprise en charge se fait en deux étapes et de préférence hors tension (i.e. sous consignation du circuit de ligne concerné), d'abord une étape de reprise en charge du terne, puis une étape de reprise en charge du câble de garde alors que le dispositif porte déjà le terne.

Il apparaîtra plus généralement à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Dispositif (36) de reprise en charge d'au moins un câble conducteur de ligne aérienne de transport et/ou de distribution de courant électrique, comportant :
- une extrémité supérieure (12) avec élément supérieur (14) de fixation à une extrémité d'élingue (112, 114) pour engin de levage (108, 110) ;
- une poulie (26) à face ouverte de récupération de câble conducteur ;
**caractérisé en ce qu'**il comporte en outre :
- un palonnier supérieur (20) solidaire de l'extrémité supérieure (12) ; et
- un palonnier inférieur (22) :
• suspendu au palonnier supérieur (20) à l'aide au moins d'une paire principale (24) de chaînes d'isolateurs (24A, 24B), et
• à une extrémité latérale duquel est suspendue la poulie (26) à face ouverte de récupération de câble.

2. Dispositif (36) de reprise en charge d'au moins un câble selon la revendication 1, comportant au moins une répétition de l'assemblage (54) suivant, fixé entre la paire principale (24) de chaînes d'isolateurs (24A, 24B) et le palonnier inférieur (22) :
- un palonnier intermédiaire supérieur (40) à une extrémité latérale duquel est suspendue une poulie à face ouverte de récupération de câble supplémentaire (48) ;
- un palonnier intermédiaire inférieur (42) suspendu et rigidement fixé au palonnier intermédiaire supérieur (40) à l'aide d'une structure de raidissement (44A, 44B, 44C) ;
- une paire supplémentaire (46) de chaînes d'isolateurs (46A, 46B) suspendue et fixée au palonnier intermédiaire inférieur (42) ;
sachant que le palonnier intermédiaire supérieur (40) de l'assemblage le plus élevé de ladite au moins une répétition est suspendu et fixé à la paire principale (24) de chaînes d'isolateurs (24A, 24B), et que le palonnier inférieur (22) est suspendu et fixé à la paire supplémentaire (46) de chaînes d'isolateurs (46A, 46B) de l'assemblage le moins élevé de ladite au moins une répétition.

3. Dispositif (36) de reprise en charge d'au moins un câble selon la revendication 2, dans lequel la structure de raidissement (44A, 44B, 44C) comporte des éléments crantés pour un réglage en distance relative et en décalage latéral relatif du palonnier intermédiaire inférieur (42) par rapport au palonnier intermédiaire supérieur (40) de chaque répétition de l'assemblage (54).

4. Dispositif (36) de reprise en charge d'au moins un câble selon la revendication 3, dans lequel les éléments crantés sont configurés pour un réglage par pas d'au plus dix cm en distance relative et en décalage latéral relatif du palonnier intermédiaire inférieur (42) par rapport au palonnier intermédiaire supérieur (40) de chaque répétition de l'assemblage (54).

5. Dispositif (36) de reprise en charge d'au moins un câble selon la revendication 3 ou 4, dans lequel les éléments crantés sont des barres télescopiques crantées.

6. Dispositif (36) de reprise en charge d'au moins un câble selon l'une quelconque des revendications 1 à 5, dans lequel une chaîne d'isolateurs (32) lestée (34) est en outre suspendue à une autre extrémité latérale du palonnier inférieur (22), opposée à l'extrémité latérale à laquelle est suspendue la poulie (26) à face ouverte de récupération de câble.

7. Dispositif (36) de reprise en charge d'au moins un câble selon l'une quelconque des revendications 1 à 6, dans lequel la poulie (26) à face ouverte de récupération de câble, respectivement chaque poulie à face ouverte de récupération de câble supplémentaire (48) le cas échéant, est dotée d'un bras de guidage, incliné vers le haut lorsqu'elle est en disposition suspendue, pour un guidage de câble conducteur vers au moins un réa (30, 52 ; 64) qu'elle comporte.

8. Kit (10) pour le montage d'un dispositif (36) de reprise en charge d'au moins un câble conducteur de ligne aérienne de transport et/ou de distribution de courant électrique, comportant les éléments suivants :
- une extrémité supérieure (12) avec élément supérieur (14) de fixation à une extrémité d'élingue (112, 114) pour engin de levage (108, 110) ;
- une poulie (26) à face ouverte de récupération de câble conducteur ;
**caractérisé en ce qu'**il comporte en outre :
- un palonnier supérieur (20) configuré pour être solidarisé à l'extrémité supérieure (12) ; et
- un palonnier inférieur (22) et une paire principale (24) de chaînes d'isolateurs (24A, 24B), configurés pour permettre une suspension du palonnier inférieur (22) au palonnier supérieur (20) à l'aide au moins de cette paire principale (24) de chaînes d'isolateurs (24A, 24B), une extrémité latérale du palonnier inférieur (22) étant en outre configurée pour que la poulie (26) à face ouverte de récupération de câble y soit suspendue.

9. Kit (10) selon la revendication 8, dans lequel les éléments constitutifs du kit sont configurés pour être solidarisés les uns aux autres par axes d'assemblage et goupilles ou par axes de balanciers.

10. Procédé de reprise en charge d'au moins un câble conducteur de ligne aérienne de transport et/ou de distribution de courant électrique, à l'aide d'un dispositif (36 ; 88, 98) de reprise en charge d'au moins un câble selon l'une quelconque des revendications 1 à 7 ou monté à partir d'un kit (10 ; 10, 54) selon la revendication 8 ou 9, comportant les étapes suivantes :
- fixation (206) d'une première extrémité d'élingue (112, 114) à un engin de levage (108, 110) ;
- fixation (208) de l'élément supérieur (14) de fixation du dispositif (36 ; 88, 98) de reprise en charge à une deuxième extrémité de l'élingue (112, 114) ;
- élévation (210) du dispositif (36 ; 88, 98) de reprise en charge à l'aide de l'engin de levage (108, 110), pour une approche dans un voisinage d'un pylône (66) de la ligne aérienne supportant chaque câble conducteur à reprendre en charge ;
- engagement (212) de chaque câble conducteur dans un réa (30, 52 ; 64) de chaque poulie (26 ; 26, 48) à face ouverte du dispositif (36 ; 88, 98) de reprise en charge, au voisinage du pylône (66) ;
- désolidarisation (214) de chaque câble conducteur du pylône (66) ; et
- éloignement (216) du dispositif (36 ; 88, 98) de reprise en charge à l'aide de l'engin de levage (108, 110), pour un maintien à distance de chaque câble conducteur par rapport au pylône (66).
